# FASCICULE DE BREVET EUROPEEN

(11) **EP 1 387 773 B1**
(45) Date de publication et mention de la délivrance du brevet: **13.07.2005**
(21) Numéro de dépôt: 02761897.4
(22) Date de dépôt: 02.04.2002
(51) Int. Cl.: B60C 15/00, B60C 9/02, B29D 30/16

(54) **PNEUMATIQUE AVEC STRUCTURE DE RENFORT**
REIFEN MIT VERSTRÄRKUNGSKONSTRUKTION
TYRE WITH REINFORCING STRUCTURE

(30) Priorité: 10.04.2001 FR 0104930
(43) Date de publication de la demande: 11.02.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PANNING, Nathan, F-63100 Clermont-Ferrand (FR)
(74) Mandataire: Dequire, Philippe Jean-Marie Denis
(86) Numéro de dépôt international: PCT/EP2002/003612
(87) Numéro de publication internationale: WO 2002/083434

(56) Documents cités:
- EP-A- 0 897 813
- EP-A- 0 928 702
- US-A- 3 481 386
- US-A- 3 935 894

## Description

La présente invention concerne les pneumatiques. Plus particulièrement, elle concerne la disposition et la configuration de la structure de renforcement dans les flancs, dans les bourrelets et dans la zone du sommet du pneumatique; elle concerne également l'ancrage des fils de carcasse dans le bourrelet et les renforcements de différentes portions du bourrelet ou du flanc.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Pour certaines applications particulières où le pneumatique peut par exemple être soumis à des charges plus importantes ou subir des chocs plus violents, etc, il peut s'avérer souhaitable de pouvoir affiner certaines caractéristiques telles la rigidité, la résistance aux impacts, etc. Par ailleurs, afin de faciliter l'automatisation de certaines étapes du processus de fabrication des pneumatiques, il peut s'avérer avantageux de revoir la nature et/ou la disposition de certains des éléments constituants.

Dans la technique actuelle, il est assez difficile d'assurer une modulation des caractéristiques du flanc et/ou du bourrelet. Le flanc doit présenter une souplesse importante, et le bourrelet doit au contraire présenter une importante rigidité. Par ailleurs, les renforts que l'on dispose dans cette partie du pneumatique présentent toujours inévitablement une discontinuité: au niveau de l'extrémité radialement supérieure du retournement de carcasse, on passe sans transition dans une zone dépourvue de ce retournement de carcasse, zone qui est donc inévitablement moins rigide.
Enfin, les exigences de coût sont de plus en plus sévères et imposent des gains de productivité de plus en plus difficiles à obtenir, compte tenu de la technicité sans cesse grandissante des produits. Toute méthode ou dispositif permettant de produire des pneumatiques à des cadences plus rapides en conservant le niveau de qualité sont donc potentiellement avantageux.

Pour tenir compte de cette environnement et de ces contraintes, l'invention prévoit un pneumatique du type montré par EP-A-897813, comportant au moins une structure de renfort de type carcasse ancrée de chaque côté du pneumatique dans un bourrelet dont la base est destinée à être montée sur un siège de jante, une armature de sommet, chaque bourrelet se prolongeant radialement vers l'extérieur par un flanc, les flancs rejoignant radialement vers l'extérieur une bande de roulement, la structure de renfort comprenant:
- un premier filament formant d'une part au niveau du sommet et des flancs une série de portions transversales s'étendant sensiblement d'un bourrelet à l'autre du pneumatique, et d'autre part, au niveau des bourrelets, des raccords en forme de U réunissant deux portions transversales successives du premier filament,
- un second filament formant d'une part au niveau du sommet et des flancs une série de portions transversales s'étendant sensiblement d'un bourrelet à l'autre du pneumatique, et d'autre part, au niveau des bourrelets, des raccords en forme de U réunissant deux portions transversales successives du second filament,
- les parcours respectifs des premier et second filaments étant agencés de façon à ce que, entre le sommet et le bourrelet, un groupe de filaments formé par un premier et un second filament voisins (ou successifs) forment au moins une portion de parcours sensiblement parallèles.

Un tel agencement comportant des groupes de filaments sensiblement parallèles permet de réaliser une configuration multifilaments de façon très économique. Les groupes de fils peuvent être appliqués sensiblement simultanément, par exemple au moyen d'une tête de pose unique. De cette façon, et grâce au type particulier d'architecture selon l'invention, il est possible de diviser par deux ou même par trois ou plus le temps de pose des filaments de renfort de type carcasse, en particulier si on réalise la fabrication sur un noyau central préformé à l'image d'un pneumatique.

Par ailleurs, la disposition en groupes sensiblement parallèles permet de disposer les filaments très près les uns des autres, contribuant à augmenter la densité de fils. Cela joue un rôle favorable pour bon nombre de propriétés mécaniques. Ainsi par exemple, cela peut permettre d'augmenter le module, la résistance à la rupture, etc.

De manière avantageuse, les portions de parcours sensiblement parallèles représentent au moins sensiblement 25% du parcours total des filaments entre le sommet et la zone d'ancrage et de préférence entre sensiblement 30% et 80% du parcours total des filaments entre le sommet et la zone d'ancrage.

Dans la mesure où les fils sont posés par paires ou toute autre forme groupée, le temps de pose est réduit, diminuant ainsi le coût de revient.

De manière avantageuse, les portions de parcours sensiblement parallèles sont prévues dans le flanc, sensiblement radialement extérieurement à la zone d'ancrage, et de préférence radialement extérieurement à la zone correspondant sensiblement à l'équateur dudit flanc. C'est structurellement à partir de l'équateur en se dirigeant vers le sommet que la pose sous forme de groupes parallèles est la plus aisées et précise. De préférence, l'équateur considéré est celui correspondant à l'équateur du noyau sur lequel les différents éléments constituants du pneumatique sont assemblés.

Selon un autre exemple avantageux, le pneumatique comprend un troisième filament formant d'une part au niveau du sommet et des flancs, une série de portions transversales s'étendant sensiblement d'un bourrelet à l'autre du pneumatique, et d'autre part, au niveau des bourrelets, des raccords en forme de U réunissant deux portions transversales successives du troisième filament, les parcours respectifs des premier, second et troisième filaments étant agencés de façon à ce que, entre le sommet et le bourrelet, un groupe de filaments formé par un premier, un second et un troisième filament voisins (ou successifs) forment au moins une portion de parcours sensiblement parallèles.

On peut alors diviser par trois le temps de pose si les fils sont posés en groupe. La densité de pose peut également être augmentée, par des cheminements sensiblement similaires et rapprochés des fils d'un même groupe.

Au moins un agencement de fils suivant un parcours sensiblement circonférentiel est de préférence disposé de façon sensiblement adjacente à ladite structure de renfort au niveau du bourrelet.

Selon un autre exemple avantageux, les portions de parcours sensiblement parallèles suivent des trajectoires sensiblement géodésiques, radiales ou non radiales..

Selon un autre exemple de réalisation avantageux, les tronçons "aller" et "retour" d'au moins deux groupes distincts se croisent de façon à former un maillage de fils. Par exemple, les portions de parcours sensiblement parallèles sont agencées de façon à former, sur un côté donné du pneumatique, une trajectoire en forme d'aller-retour circonférentiellement décalés. Ladite trajectoire est avantageusement en forme de V ou de U. Une des portions aller ou retour chemine le long de l'autre portion aller ou retour d'une série de filaments juxtaposés, en croisant des filaments. Il résulte d'une telle configuration un tressage de filaments, se croisant à des angles plus ou moins ouverts selon la position radiale et/ou selon l'inclinaison respective de chacun des filaments.

Le pneumatique peut alors comporter une seule nappe. Une telle simplicité d'architecture et de fabrication, due notamment à la diminution du nombre de constituants, permet de diminuer les coûts.

La présente invention prévoit également un pneumatique comportant au moins une structure de renfort de type carcasse ancrée de chaque côté du pneumatique dans un bourrelet dont la base est destinée à être montée sur un siège de jante, une armature de sommet, chaque bourrelet se prolongeant radialement vers l'extérieur par un flanc, les flancs rejoignant radialement vers l'extérieur une bande de roulement, la structure de renfort comprenant:
- un premier filament formant d'une part au niveau du sommet et des flancs une série de portions transversales s'étendant sensiblement d'un bourrelet à l'autre du pneumatique, et d'autre part, au niveau des bourrelets, des raccords en forme de U réunissant deux portions transversales successives du premier filament,
- un second filament formant au niveau du sommet et des flancs une série de portions transversales s'étendant sensiblement d'un bourrelet à l'autre du pneumatique, comportant des extrémités libres étant disposées de part et d'autre du pneumatique dans la zone de chacun des bourrelets,
- les parcours respectifs des premier et second filaments étant agencés de façon à ce que, entre le sommet et le bourrelet, un groupe de filaments formé par un premier et un second filament voisins (ou successifs) forment au moins une portion de parcours sensiblement parallèles.

Selon un autre exemple de réalisation avantageux, un bourrelet comporte une tringle autour de laquelle une portion des fils est enroulée. Ceci procure un ancrage ou maintien efficace et sûr de la structure de renfort dans le bourrelet. Ce mode d'ancrage correspond à une tringle traditionnelle, largement répandue dans l'industrie du pneumatique. On utilise de préférence des fils de type textile afin de faciliter la formation des boucles.

De manière avantageuse, le pneumatique selon l'invention peut être fabriqué au moyen d'un procédé de fabrication d'un pneumatique dans lequel les différents éléments constituants sont tour à tour posés directement sur un noyau par exemple sensiblement rigide ou gonflable dont le profil correspond sensiblement à celui du produit final.

Dans le cas d'un pneumatique fabriqué selon un tel procédé automatisé dans lequel les différents éléments constituants sont tour à tour posés directement sur un noyau dont le profil correspond sensiblement à celle du produit final, le fait de poser des groupes de fils comportant deux (ou plus) fils est particulièrement avantageux. Par exemple, il en résulte une diminution importante du temps de pose de la structure de renfort.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc, qu'il s'agisse d'un traitement avant ou après la pose des fils.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, n'utilisant pas de tringle de type traditionnel, la fonction d'ancrage de la structure de renfort de type carcasse est également assurée.

On sait aussi que, toujours dans l'état de la technique, la même tringle assure en outre une fonction de serrage du bourrelet sur sa jante. Dans les configurations décrites dans la présente demande, n'utilisant de préférence pas de tringle de type traditionnel, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

Tous les détails de réalisation sont donnés dans la description qui suit, complétée par les figures 1 à 13 où:
les figure 1a et 1b sont des coupes radiales montrant essentiellement les flancs, les bourrelets et le sommet d'une première et d'une seconde forme d'exécution d'un pneumatique selon l'invention;
la figure 2 est une représentation schématique vue de dessus d'une portion de la structure de renfort d'un exemple d'un pneumatique selon l'invention, les deux flancs étant mis à plat de chaque côté de la région du sommet ;
la figure 3 est une représentation schématique vue de dessus d'une portion de la structure de renfort d'un autre exemple de pneumatique selon l'invention, les deux flancs étant mis à plat de chaque côté de la région du sommet ;
la figure 4 est une représentation schématique vue de dessus d'une portion de la structure de renfort d'un autre exemple d'un pneumatique selon l'invention, les deux flancs étant mis à plat de chaque côté de la région du sommet ;
la figure 5 est une vue agrandie de la portion gauche de la figure 4 ;
la figure 6 est une représentation schématique vue de dessus d'une portion de la structure de renfort d'un pneumatique selon l'invention, les deux flancs étant mis à plat de chaque côté de la région du sommet ;
la figure 7 est une vue agrandie de la portion gauche de la figure 6 ;
la figure 8 est une vue de côté d'une portion d'un pneumatique non-fini selon l'invention, dans lequel des groupes comportant trois fils sont disposés suivant des parcours de type bias ;
la figure 9 est une vue de côté d'une portion d'un pneumatique non-fini selon l'invention, dans lequel des groupes comportant trois fils sont disposés suivant des parcours de type bias-symétrique, dans lesquels les tronçons « aller » sont symétriques et inversés par rapport au tronçons « retour » , la multiplication des groupes entraînant de ce fait un agencement en forme de tressage ou maillage de fils ;
la figure 10a illustre une vue de côté d'une portion d'un pneumatique non-fini selon l'invention, dans lequel des groupes sont disposés suivant des parcours de type géodésiques ;
les figures 11a, 11b et 11c illustrent des profils méridiens d'une variante comportant une tringle traditionnelle, par exemple constituée d'un câble métallique ou composite ;
les figures 12a, 12b et 12c illustrent, au moyen de vues en perspective d'une coupe d'une portion d'un pneumatique selon l'invention, des exemples de cheminements d'une structure de renfort en groupe en relation avec une structure circonférentielle d'ancrage ;
les figures 13a à 13d illustrent un exemple d'une méthode permettant la fabrication de pneumatiques tels que ceux décrits dans les figures précédentes, avec la pose sensiblement simultanée d'au moins deux fils.

Dans les différentes figures, des numéros de références identiques sont utilisés afin d'identifier des éléments similaires.

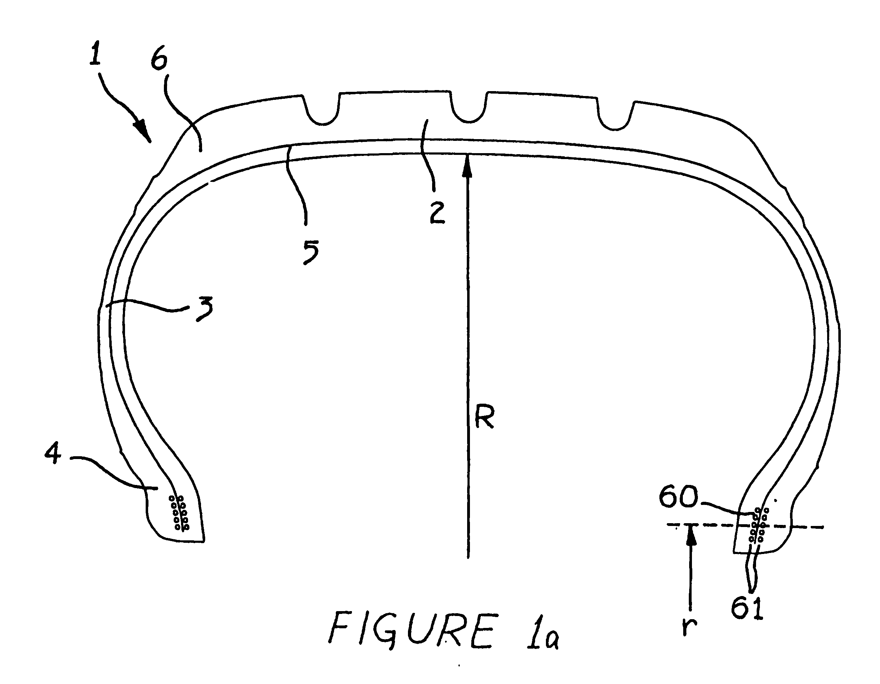

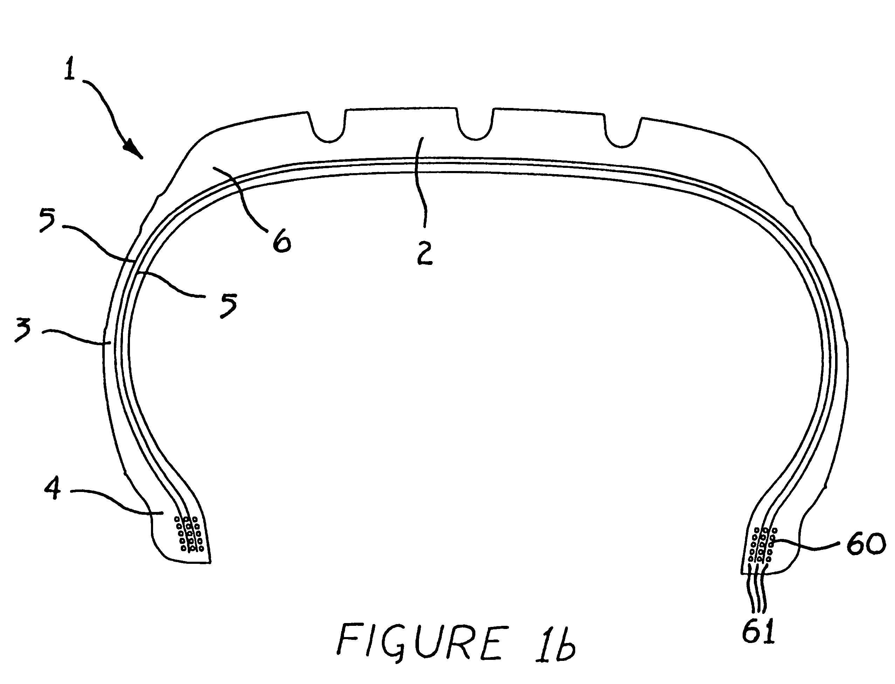

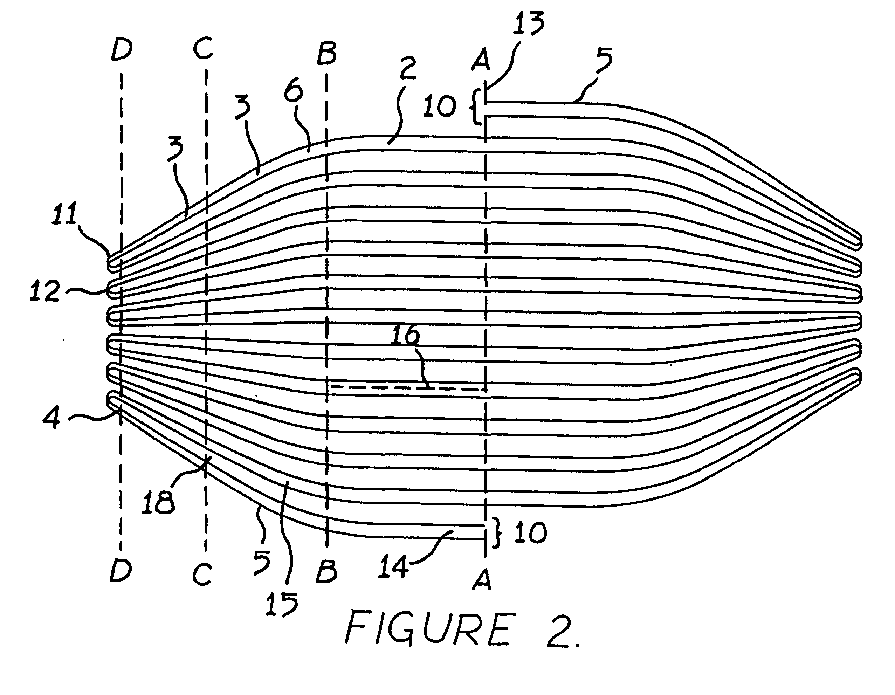

Les figures 1a, 1b et 2 illustrent un premier mode de réalisation du pneumatique 1 selon l'invention. Les principaux éléments constituants sont bien visibles sur les figures 1a et 1b qui présentent une coupe mettant en évidence le profil du pneumatique 1. Celui-ci comprend des flancs 3, de chaque côté, surmontés d'un sommet 2, joignant les deux portions radialement supérieure des flancs 3.

Dans la portion radialement intérieure des flancs 3, se trouvent des bourrelets 4, prévus pour un montage sur une jante de forme et de dimensions adaptées.

Afin d'assurer un parfait ancrage de la structure de renfort, on réalise de préférence un bourrelet composite stratifié. A l'intérieur du bourrelet 4, entre les alignements de fil de la structure de renfort, on dispose des fils 60 orientés circonférentiellement. Ceux-ci sont disposés en une pile 61 comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 5 coopèrent avec les bourrelets. Il se crée ainsi un ancrage de ces portions dans lesdits bourrelets de manière à assurer l'intégrité du pneumatique. Afin de favoriser cet ancrage, l'espace entre les fils circonférentiels et la structure de renfort est occupé par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange à haut module d'élasticité dans la zone d'intersection entre l'arrangement de fils et la structure de renfort. A titre d'exemple non limitatif, le module d'élasticité d'un tel mélange peut atteindre ou même dépasser 15 à 25 Mpa et même dans certains cas atteindre, voire dépasser 40 Mpa.

Ce mélange à haut module est avantageusement disposé de façon à être en contact direct avec les portions adjacentes de la structure de renfort 5. Dans les configurations traditionnelles, une nappe carcasse (fil imprégné dans une couche de mélange caoutchoutique) est appliquée. Il en résulte donc une mince couche intermédiaire de mélange à plus faible module qui se trouve entre le mélange à haut module et la portion de structure de renfort. Avec le contact direct, donc sans la présence de cette couche mince de mélange à plus faible module, l'impact de la présence du mélange à haut module dans la zone est amplifié. En effet, la traditionnelle couche mince à plus faible module engendre des pertes d'énergies, qui peuvent occasionner une détérioration des propriétés mécaniques.

Les arrangements de fils peuvent être agencés et fabriqués de plusieurs façons. Par exemple, une pile 61 peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être retourné ou replié lors de la confection. Cette confection peut par exemple utiliser les dispositifs décrits dans le brevet EP 0 580 055, ainsi que la demande française 00/01394, pour la pose des fils de renfort de carcasse, et dans le document EP 0 264 600 pour la pose des gommes caoutchoutiques. Le pneumatique peut être moulé et vulcanisé comme exposé dans le brevet US 4 895 692.

Selon ce premier exemple (figure1a), un premier et un second filaments de renfort de type carcasse 5 sont agencés le long de la circonférence du pneumatique de façon à former une structure de renfort partiellement torique ou en forme de U inversé lorsque observé selon une section du pneumatique comme à la figure 1a.

Ainsi, chacun des filaments s'étend transversalement d'un côté à l'autre du pneumatique. Dans les différents exemples des figures 1 à 10, ce cheminement se prolonge d'un bourrelet à l'autre. Le déplacement circonférentiel du filament entre les fils de deux groupes adjacents est de préférence prévu dans la portion radialement la plus intérieure du parcours ; le filament est alors retourné de sensiblement 180° de manière à remonter sur le flanc 3, traverser la zone du sommet 2, puis se prolonger radialement vers l'intérieur le long du flanc opposé, jusqu'à une position radiale sensiblement symétrique à celle du premier flanc. Le filament est alors retourné de sensiblement 180 ° pour réamorcer un nouveau parcours d'un côté à l'autre de façon similaire. Les retournements forment des raccords 11, avantageusement en forme de U, mais possiblement suivant un angle plus aigu ou encore suivant une forme moins régulière.

Les premier et second filaments sont agencés circonférentiellement de façon similaire, mais suivant des positions circonférentielles légèrement décalées, de façon à ne pas se superposer sur des longueurs importantes. Tel qu'illustré à la figure 2, les filaments forment avantageusement des groupes 10 de filaments. Dans l'exemple de la figure 2, il s'agit de groupes de deux filaments. Un premier tronçon 14 « aller » permet au groupe de s'étendre depuis le sommet 2 vers un des flancs 3. A la zone de retournement, les deux filaments du groupe sont retournés pour former des raccords 11. Ces raccords de plusieurs filaments génèrent des croisements 12 de filaments. Le groupe poursuit sa trajectoire vers le sommet en formant un second tronçon 15 « retour ».

La figure 1a présente une variante avec une seule structure de renfort 5, tandis que la figure 1b présente une variante comportant deux structures, l'une interne et l'autre externe, séparées par une couche de mélange caoutchoutique.

Dans chacun des tronçons 14 et 15, les groupes comportent chacun au moins une portion de parcours 16 sensiblement parallèles, dans lesquelles les deux filaments voisins d'un même groupe cheminent suivant des trajectoires sensiblement parallèles.

La figure 2 illustre un exemple de réalisation dans lequel les portions de parcours 16 sensiblement parallèles sont sensiblement comprises entre la portion médiane 13 du sommet, selon la ligne A-A, et la région de l'épaule 6, selon la ligne B-B.

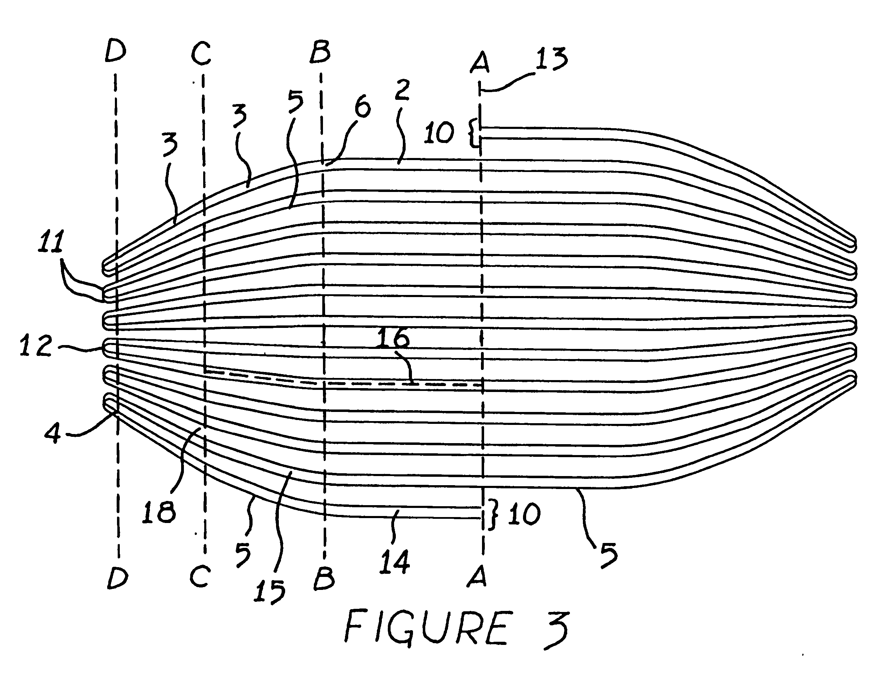

La figure 3 illustre un exemple de réalisation dans lequel les portions de parcours 16 sensiblement parallèles sont sensiblement comprises entre la portion médiane 13 du sommet, selon la ligne A-A, et la région de l'équateur, selon la ligne C-C.

Dans ces deux exemples, la distance circonférentielle séparant deux filaments voisins ou d'un même groupe 10, est inférieure à la distance entre deux filaments voisins appartenant chacun à deux groupes distincts.

Dû aux trajectoires sensiblement radiales des fils, qui s'apparentent en fait à des trajectoires sensiblement méridiennes, pour un pas P donné, l'écartement circonférentiel entre deux groupes de fils voisins varie sensiblement régulièrement entre la zone basse et la région du sommet du pneumatique. Le plus souvent, dû au rayon inférieur en zone basse du pneumatique, les filaments y sont plus près les uns des autres. Au fur et à mesure qu'on s'approche du sommet, le rayon devient plus grand et les filaments disposent alors de plus d'espace circonférentiel entre eux. Les figures 2 à 7 illustrent bien ce contexte puisqu'il s'agit de projections dans le plan d'arrangements qui sont prévus pour occuper une position spatiale telle que la zone du sommet est sur un premier rayon R et la zone du bourrelet 4 est positionnée sur un autre rayon r plus petit que le premier rayon R. La forme sensiblement torique d'un pneumatique rend inévitable ce genre de variation de rayon. Il est donc en pratique impensable d'avoir une distance inter-fils constante entre R et r.

La présente invention est à contre-courant de cet enseignement puisque on conserve la distance entre deux fils sur une portion donnée en formant des groupes. En contre partie, la distance entre les fils de deux groupes voisins varie sensiblement entre les positions radiales R et r de façon à compenser les portions parallèles des groupes.

Les cadences industrielles de production et les contraintes de productivité sont aujourd'hui telles que des vitesses de fabrication très élevées sont requises et font que la régularité de la pose n'est pas absolue. Les exigences mécaniques du produit tolèrent par ailleurs une certaine marge quant à la précision, sans aucunement en affecter la qualité finale. Ainsi, selon l'invention, un pneumatique peut comporter des agencement filaires présentant des trajectoires filaires dont la régularité n'est pas aussi absolue que celle illustrée dans les figures.

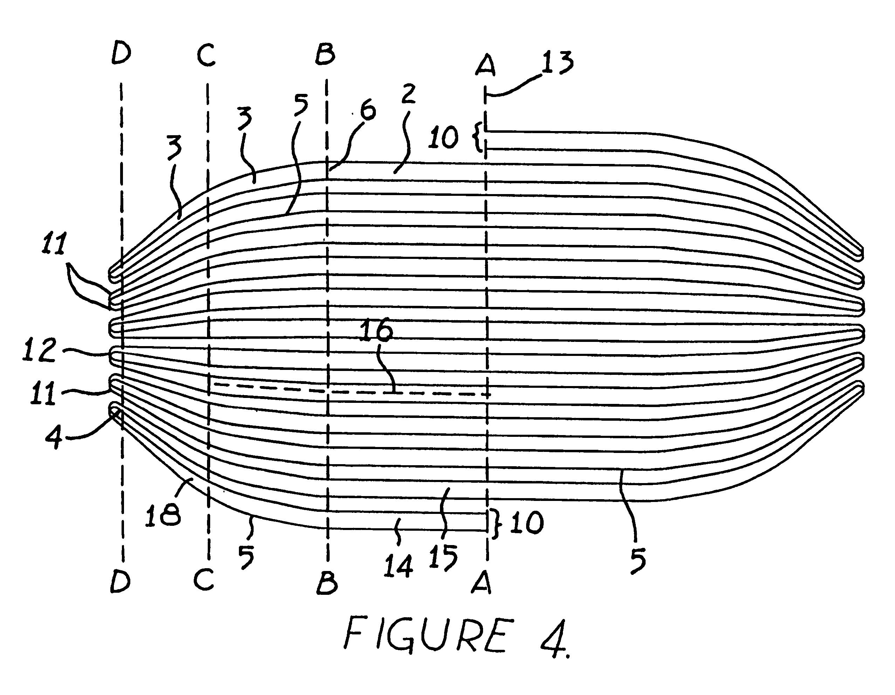

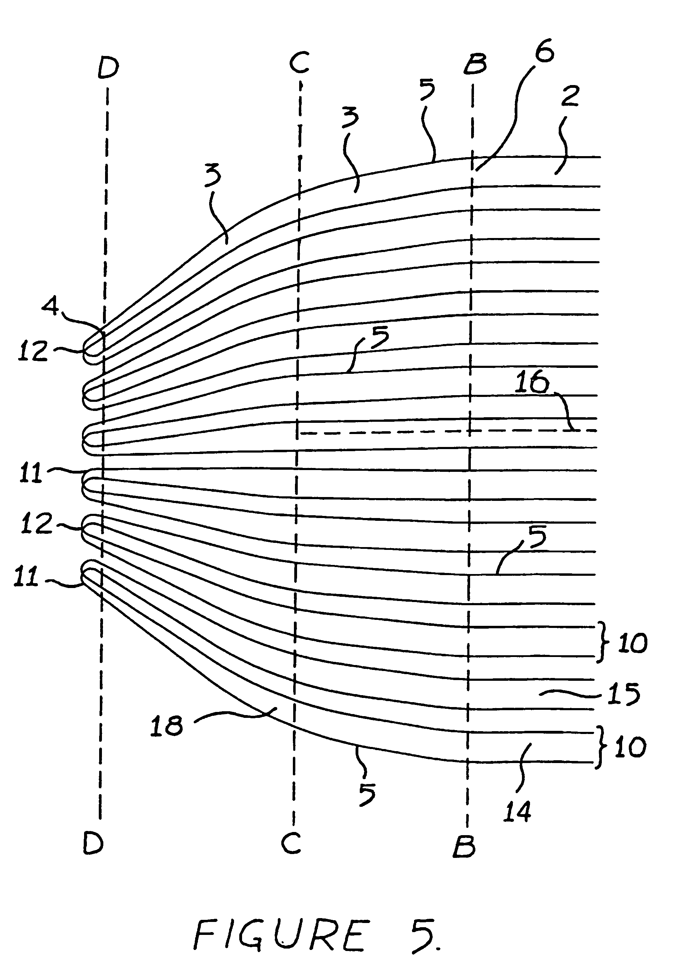

La figure 4 présente un autre exemple de réalisation dans lequel la distance circonférentielle séparant deux filaments voisins ou d'un même groupe, est supérieure à la distance entre deux filaments voisins appartenant chacun à deux groupes voisins. Afin de mieux visualiser l'effet créé par ce type de configuration, la figure 5 illustre un agencement similaire à celui de la figure 4, mais selon une vue partielle agrandie.

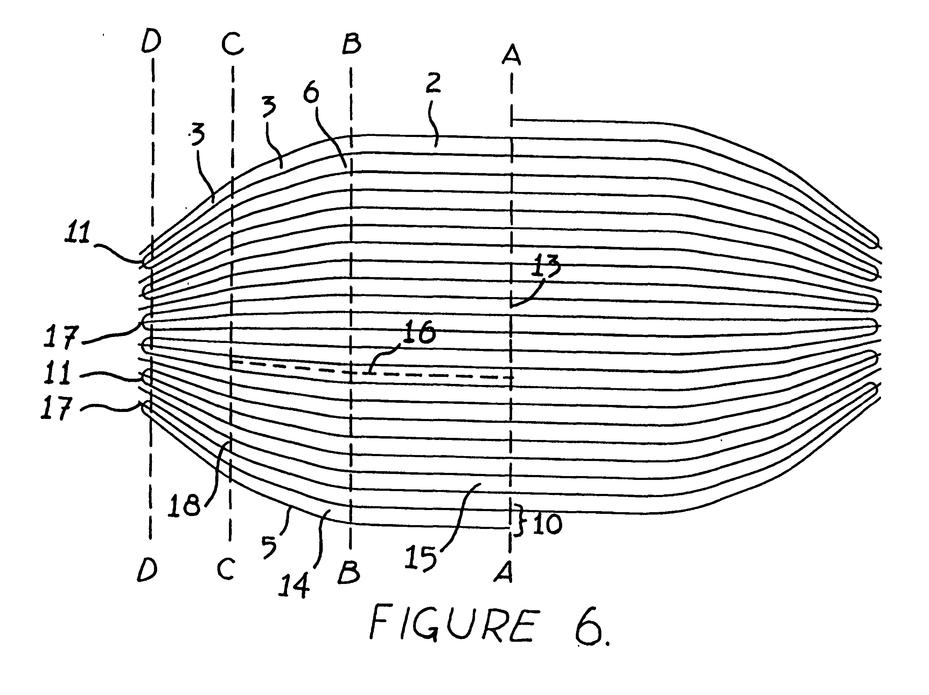

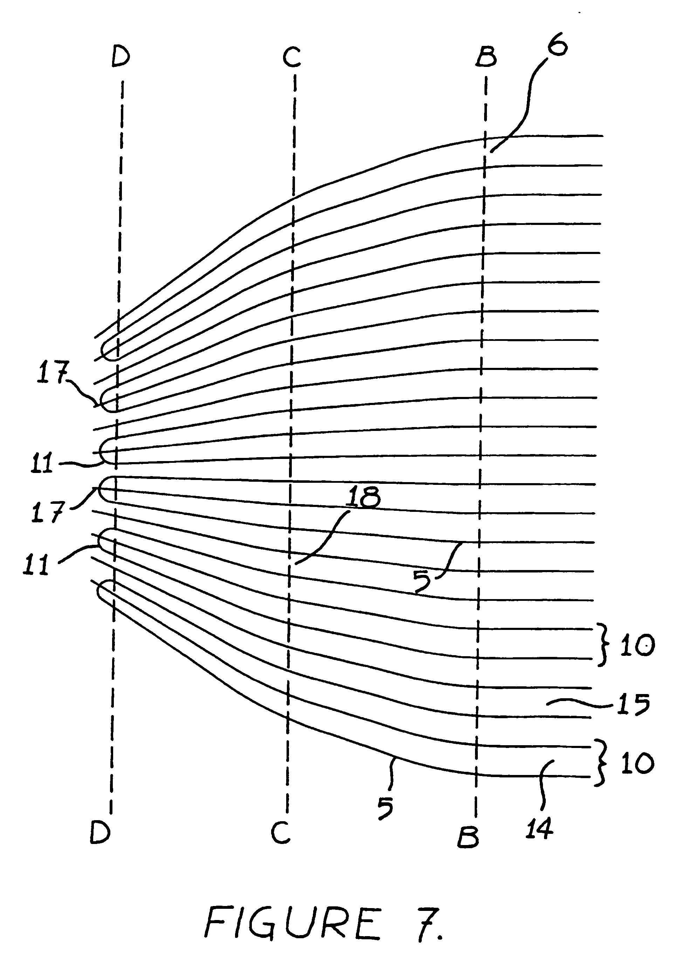

Les figures 6 et 7 illustrent un autre exemple de réalisation dans lequel un des fils d'un groupe (dans le cas d'un groupe de deux fils) comporte une extrémité libre 17 disposée dans la région du bourrelet. La figure 6 présente le cheminement d'un bourrelet à l'autre tandis que la figure 7 illustre une portion agrandie du cheminement d'un seul côté du pneumatique. Dans l'exemple illustré, l'extrémité libre 17 se prolonge sensiblement radialement intérieurement au-delà du raccord 11 du fil voisin. Selon ce mode de réalisation, un seul des fils d'un groupe de deux comporte un raccord 11 joignant une portion aller 14 d'un fils à la portion retour 15 de ce même fil. Selon diverses variantes non illustrées, l'extrémité libre 17 prend d'autres formes non radiales, par exemple comportant des portions courbées. La position radiale de l'extrémité peut aussi varier, par exemple pour se situer radialement extérieurement par rapport au raccord 11. L'extrémité libre est réalisée par exemple en coupant un des fils du groupe lors de la pose, ou encore, en remplaçant le fil continu par une série de fils dont la longueur correspond sensiblement à la trajectoire d'un bourrelet à l'autre du pneumatique.

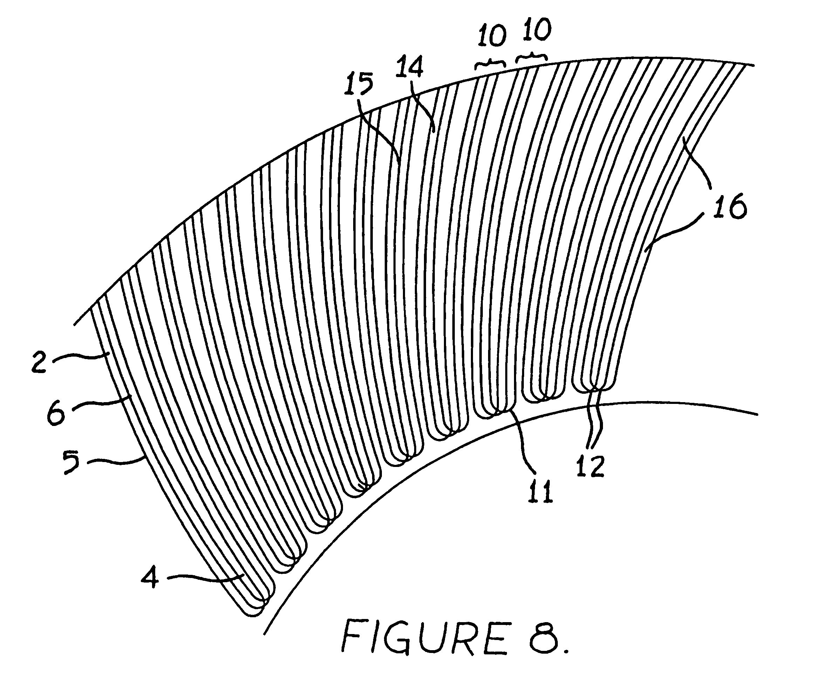

Les figures 8 à 10 illustrent divers exemples de réalisation dans lesquels des groupes de fils sont agencés suivant différents parcours de type biais.

La figure 8 présente une vue de côté d'une variante dans laquelle chaque groupe 10 comporte trois fils 5 suivant des parcours de type biais (non radial). Les portions de parcours 16 sensiblement parallèles peuvent s'étendre sensiblement d'un bourrelet à l'autre. La compensation de dimension pour passer du rayon inférieur r au rayon extérieur R s'effectue grâce à un écart inter-groupes croissant du bourrelet vers le sommet. Selon diverses variantes non illustrées, le nombre de fils par groupe peut être différent, par exemple de deux fils, quatre fils ou plus.

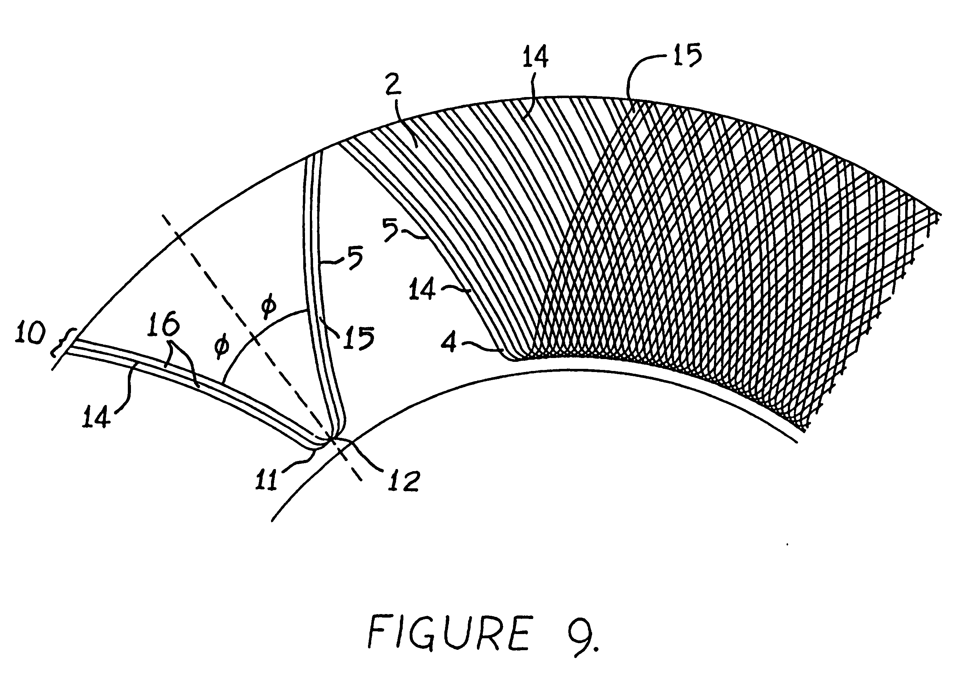

La figure 9 illustre un autre type de configuration de type biais, dans laquelle les groupes 10, après un premier tronçon « aller » 14 du sommet 2 vers un premier bourrelet 4 suivant un angle ∅ donné par rapport à une droite sensiblement radiale, forment un retournement ou raccord 11 pour retourner vers le sommet. Lorsque mesuré à la même position radiale que l'angle ∅ du tronçon « aller », le tronçon « retour » 15 forme un angle inverse (-∅) par rapport au tronçon « aller ». L'angle ∅ peut varier par exemple entre 5 et 45 degrés, suivant les cas..La portion de gauche de la figure 9 illustre clairement un exemple de parcours d'un groupe 10 isolé des autres pour faciliter la compréhension. La portion de droite de la même figure illustre l'arrangement résultant lorsque les groupes 10 constituant la structure de renfort sont disposés côte à côte suivant la direction circonférentielle. Sur cette portion, on voit que les tronçons « retour » forment un tissage ou quadrillage en repassant par dessus ou par dessous les tronçons « aller ». Un tel tissage ou maillage procure des propriétés mécaniques particulièrement intéressantes. Par exemple :
- réduction de l'épaisseur de la structure du renfort (moins de masse),
- les câbles sont plus près les uns aux autres (légèrement plus de raideur, moins de mise en compression de la nappe (ou des fils) intérieur (vers le noyau) lors de la flexion donnée par le roulage).
- Une seule étape de fabrication pour poser les fils aux angles positifs et négatifs.

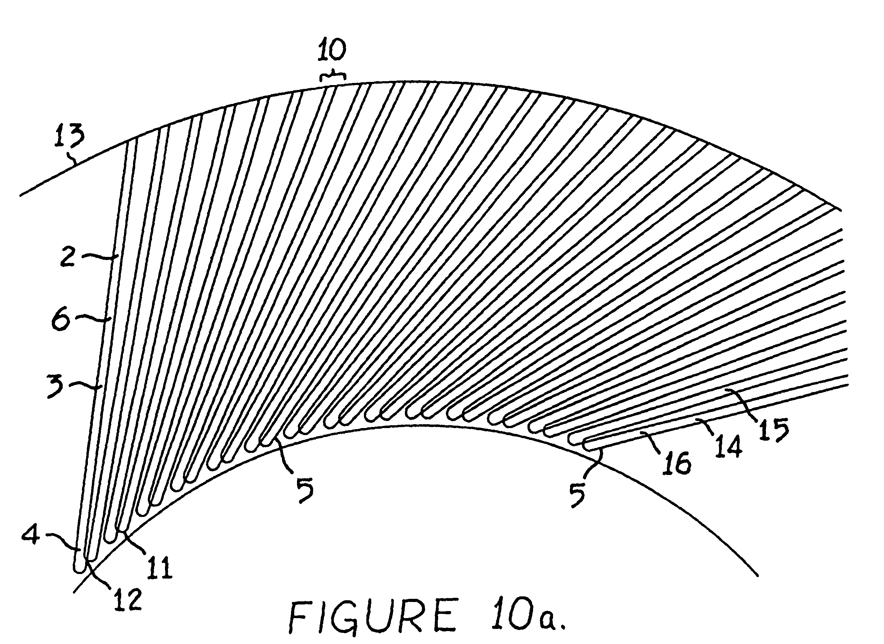

La figure 10a illustre une autre variante de configuration de type biais dans laquelle des groupes de deux fils 5 suivent des parcours sensiblement géodésiques. Les raccords 11 occupent soit des positions radiales similaires, ou encore légèrement décalées. Suivant le procédé de pose utilisé, cette dernière configuration peut éventuellement présenter quelques avantages. Ainsi par exemple, si les deux fils du groupe sont posés simultanément, il est possible de contourner un seul point de fixation situé sensiblement entre les deux raccords 11.

Dans les exemples illustrés des figures 8 à 10, les groupes de fils 5 comportent des portions de parcours 16 sensiblement parallèles s'étendant sensiblement d'un bourrelet à l'autre du pneumatique. Selon diverse variantes non illustrées, ces portions 16 peuvent être limitées, par exemple d'un équateur à l'autre, ou d'un point quelconque d'un premier flanc vers un point symétrique de l'autre flanc.

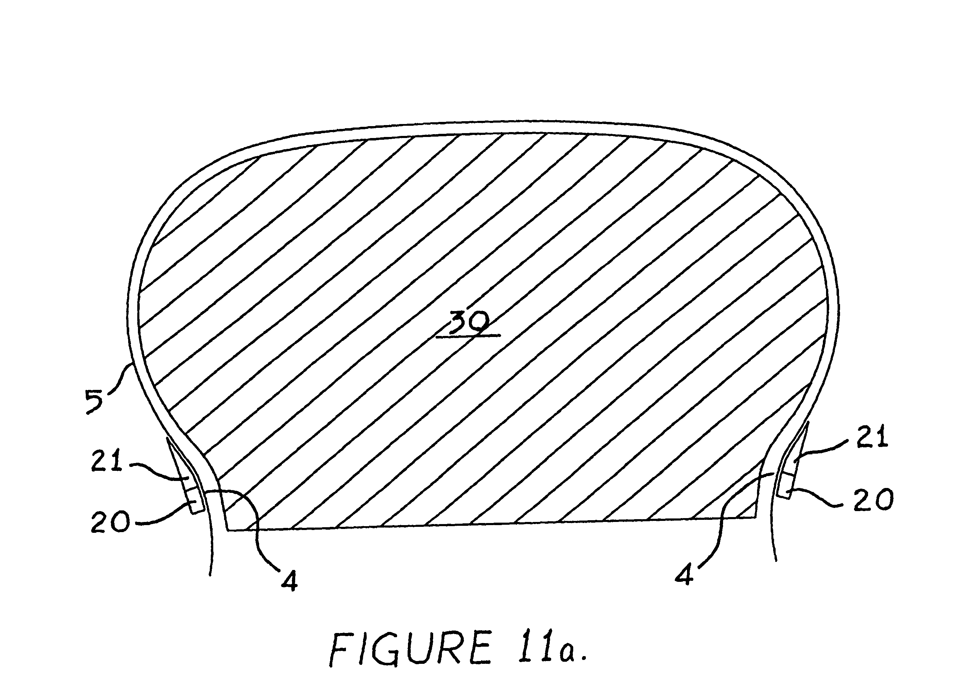

Les figures 11a, 11b et 11c illustrent des profils méridiens d'une variante comportant une tringle traditionnelle 20, par exemple constituée d'un câble métallique ou composite. En 11a, on aperçoit le fils 5 cheminant le long d'un noyau central contre lequel les différents éléments constituants du pneumatique sont appliqués successivement. Le fil chemine d'un bourrelet 4 à l'autre et se prolonge radialement intérieurement par rapport à la tringle 20. Les agencements des fils 5 en groupe 10, suivant des portions « aller » 14 et « retour » 15 formant des raccords 11 et des croisements 12 au niveau des bourrelets peuvent être, à cette étape de fabrication, comparables ou similaires à celles présentées aux figures 1 à 10. Ainsi, les raccords et croisements 11 et 12 peuvent se situer radialement intérieurement à la tringle 20.

En 11 b, on aperçoit le retournement du fil 5, tout d'abord contre la portion radialement intérieure de la tringle 20, puis contre la portion axialement extérieure de cette tringle, afin de sensiblement entourer ou envelopper cette dernière. La portion retournée 22 comprend avantageusement les raccords et croisements 11 et 12.

Tel qu'illustré à la figure 11c, les éléments restant constituant le pneumatique sont ensuite appliqués de façon à former un pneumatique 1 selon l'invention et le noyau central peut être retiré, de préférence après vulcanisation.

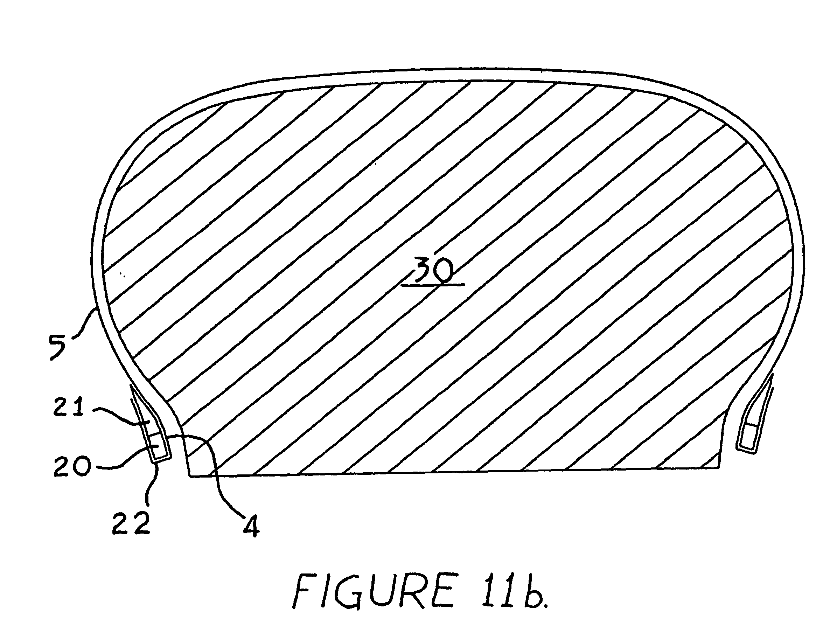

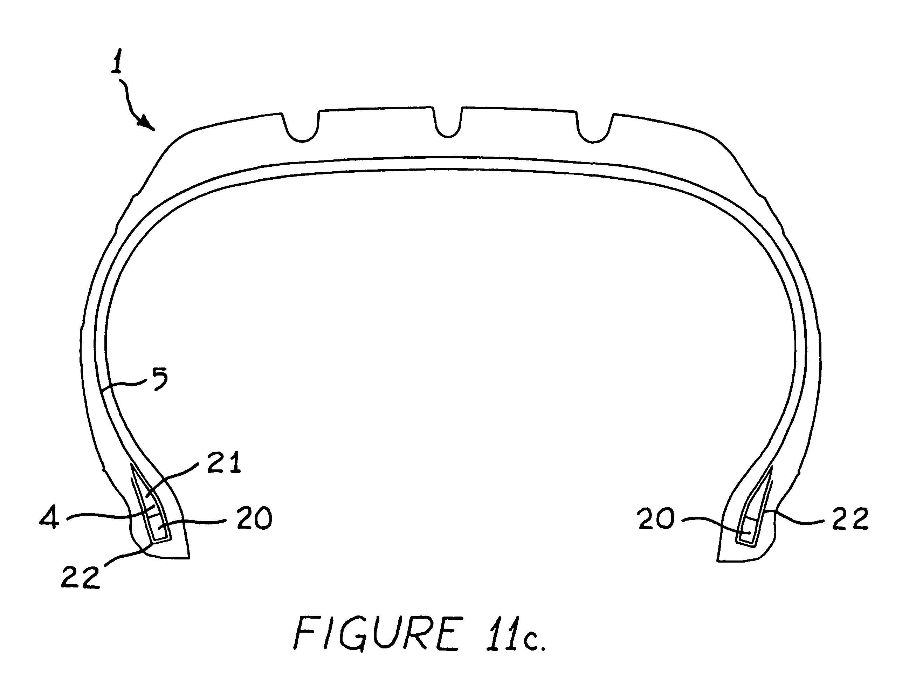

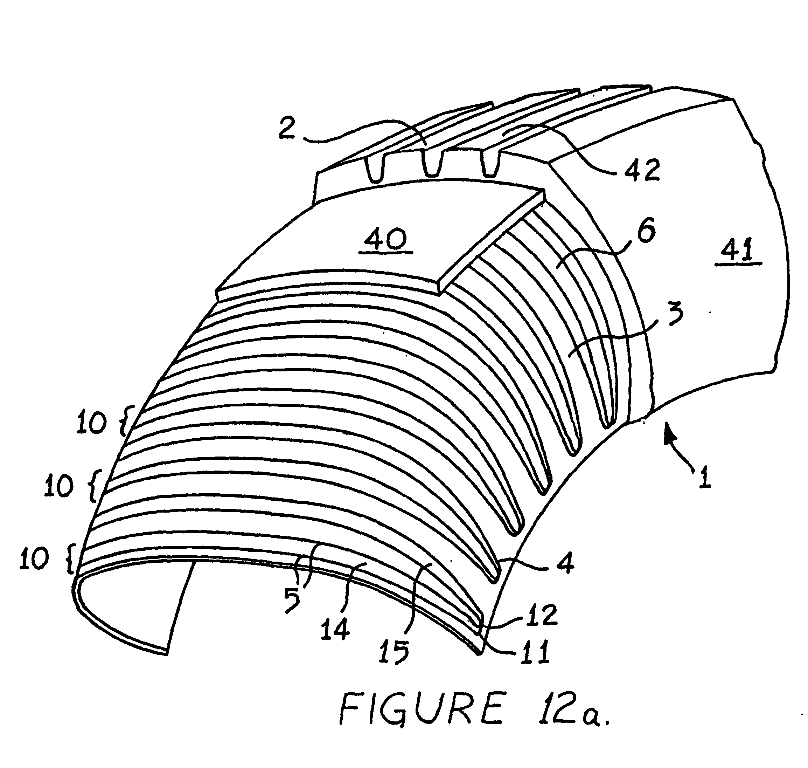

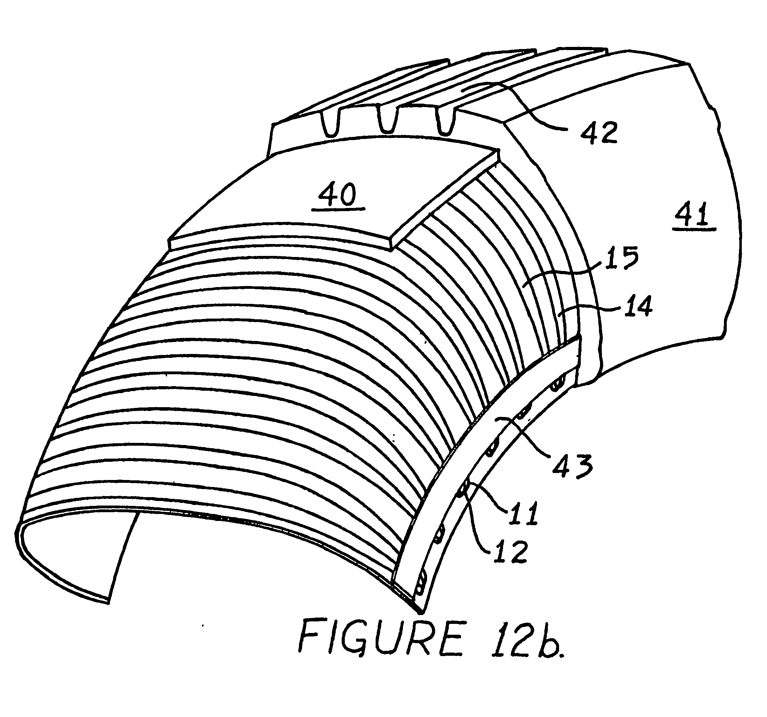

La figure 12a illustre une vue en perspective de la forme d'exécution illustrée à la figure 3. En plus des éléments préalablement décrits, la figure 12a montre une portion d'une couche ou nappe sommet 40, s'étendant circonférentiellement sur une portion du sommet 2 du pneumatique. Une telle nappe comporte avantageusement au moins un type de renfort, par exemple de type textile, agencé dans la nappe suivant une disposition sensiblement à 0° suivant la direction circonférentielle ou encore avec un angle donné fixe ou variable par rapport à cette même direction. Une bande de roulement 42 et une couche de protection des flancs 41 complètent le produit. Selon diverses variantes, on peut prévoir par exemple deux nappes à angles éventuellement avec un renfort métallique. La ou les nappe(s) sommet peuvent être aussi posées avant les fils carcasses (ou radialement intérieurement), ou selon toute une panoplie de « sandwichs » avec les nappes carcasses et nappes sommet intercalées ou imbriquées.

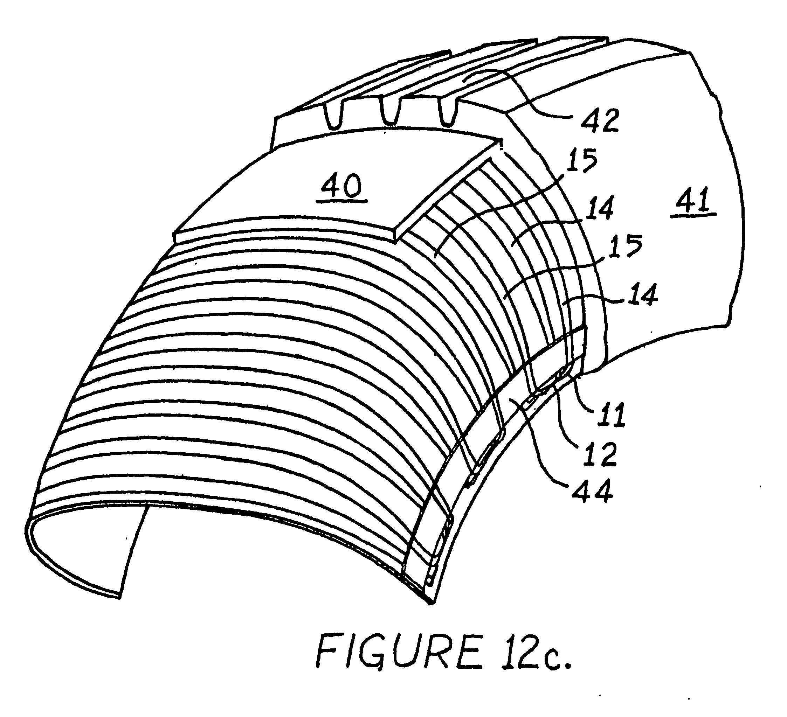

Les figures 12b et 12c illustrent des variantes de la figure 12a dans lesquelles des exemples d'ancrages de la structure de renfort dans les bourrelets sont illustrés. En 12b, la zone d'ancrage 43 est appliquée contre la base des fils 5, de préférence en laissant une couche de mélange caoutchoutique entre les fils 5 et le ou les fils de la zone d'ancrage. La zone d'ancrage est de préférence telle que préalablement décrite. Une disposition en sandwich, telle qu' à la figure 1a, avec des piles de chaque côté de la structure de renfort peut également être prévue. La variante de la figure 12c comporte une zone 44 imbriquée entre les bases de la structure de renfort. La portion basse ou radialement interne d'un tronçon comprend en alternance un premier ensemble de raccords 11 et croisements 12 disposés axialement extérieurement par rapport à la zone 44 et un autre ensemble raccords 11 et croisements 12 disposés axialement intérieurement par rapport à la zone 44. Cette séparation axiale permet de placer un plus grand nombre de fils même lorsque le rayon est petit. Les propriétés mécaniques telles la rigidité peuvent également être optimisées. Tel qu'illustré en 12c, dans cette variante, les portions « aller » 14 et « retour » 15 d'un groupe de fils 15 sont avantageusement espacées et séparées par au moins une portion « aller » et/ou « retour » d'un autre groupe de fils.

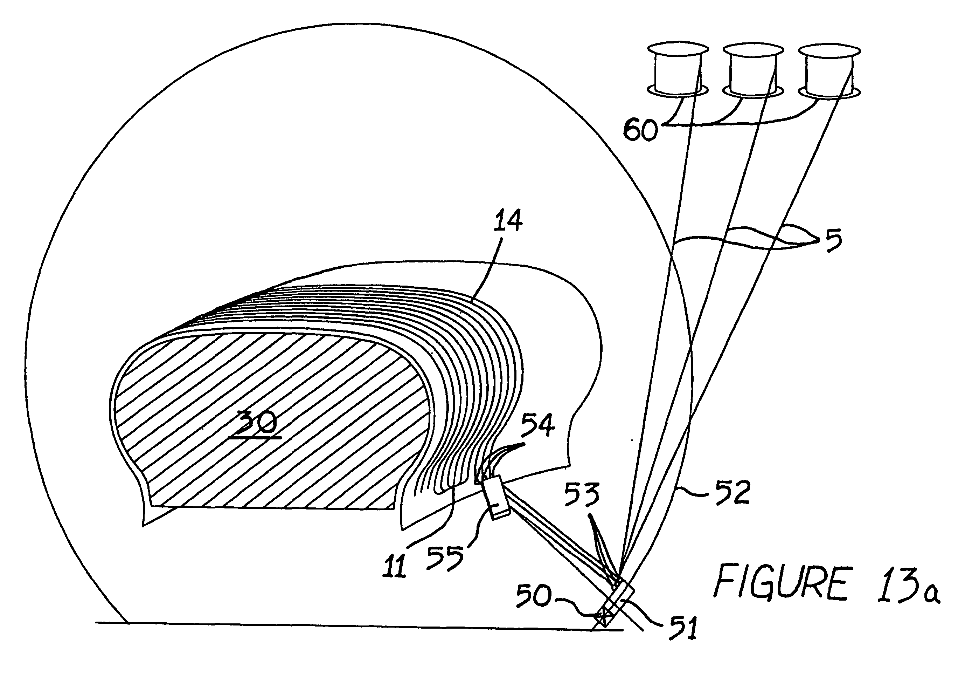

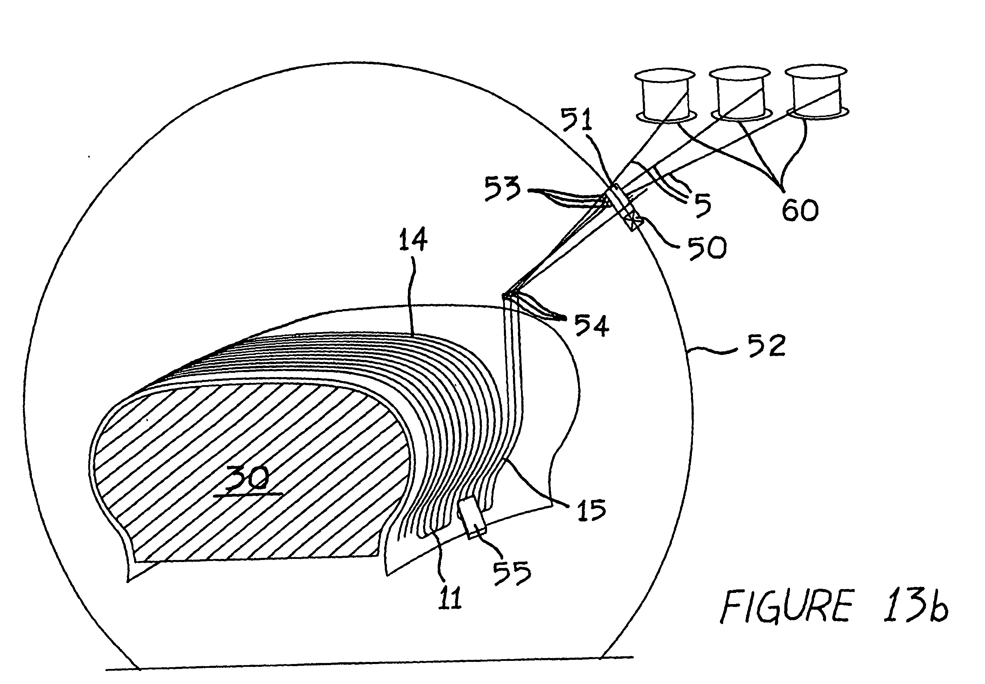

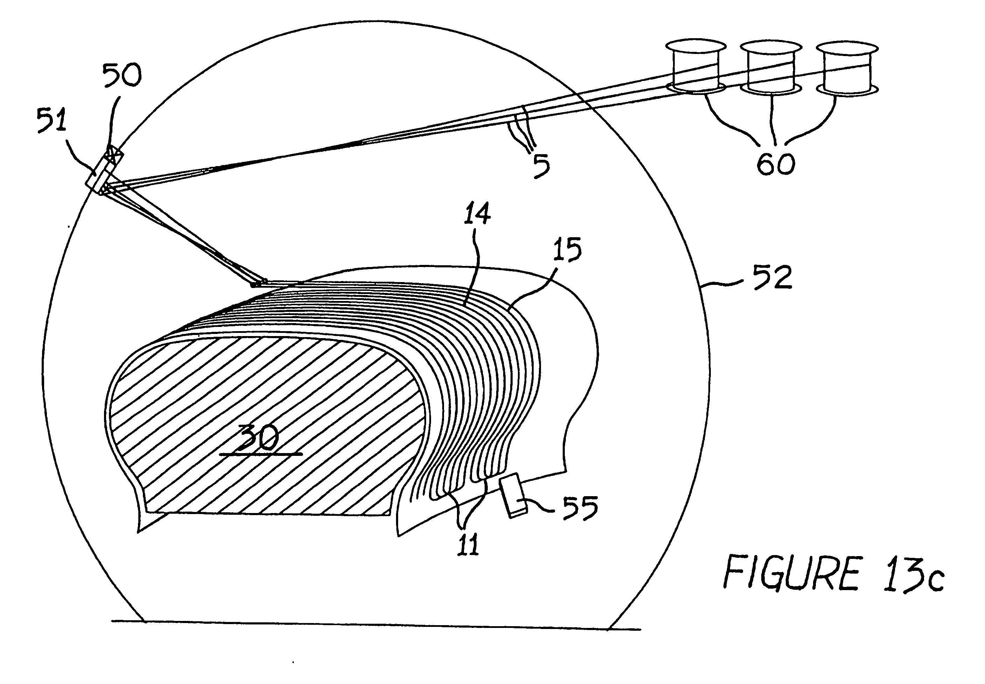

Les figures 13a à 13d illustrent un exemple d'une méthode permettant la fabrication de pneumatiques tels que ceux décrits dans les figures précédentes, avec la pose sensiblement simultanée d'au moins deux fils 50. L'utilisation de cette méthode facilite l'obtention de portions de parcours sensiblement parallèles tels que préalablement décrit. Des moyens de stockage ou d'approvisionnement permettent l'acheminement de deux, trois (ou même plus) fils susceptibles d'être appliqués sur une première couche de mélange caoutchoutique formé sensiblement à l'image du profil du produit fini. Avant application, les fils sont disposés à proximité immédiate les uns des autres à des distances correspondant sensiblement à la distance prévue entre les fils d'un même groupe. Pour l'application des fils contre le mélange, le moyen de pose se déplace dans l'espace, par exemple d'un bourrelet à l'autre, suivant le parcours que les fils à poser doivent effectuer dans le pneumatique.

Ainsi, un groupe de fils est guidé par un moyen de pose pour application suivant un parcours prédéfini. La pose peut être effectuée soit par guidage du groupe jusqu'à une distance sensiblement infinitésimale du produit destiné à recevoir les fils, soit par tassement ou par application d'un effort de pose au moyen d'un outil approprié jusqu'à entrer en contact avec le mélange caoutchoutique préalablement appliqué. Ce mélange est de préférence collant, permettant ainsi au groupe de fils d'être retenu ou maintenu en place dès qu'un léger contact est effectué entre les fils et le mélange caoutchoutique. Le groupe est donc guidé d'un bourrelet à l'autre du pneumatique, en cheminant sur les flancs et le sommet. Une fois posé jusqu'à une portion radialement inférieure d'un bourrelet, formant ainsi un tronçon « aller », le groupe de fils est guidé de façon à se déplacer circonférentiellement ou angulairement, pour permettre au groupe de fils de cheminer sur le profil suivant un parcours sensiblement voisin à la portion « aller » pour former un tronçon « retour », s'étendant jusqu'au bourrelet opposé.

Les figures 13a à 13d illustrent de façon schématique un mécanisme permettant la pose de groupes de fils telle que décrite ci-dessus. Des réserves 60 de fils permettent d'approvisionner le mécanisme de pose. Ce dernier comporte une série de moyens de guidages 53, 54 (de préférence autant de moyens que de fils à poser), de préférence mobiles d'un côté à l'autre du pneumatique, actionnés par un moyen de commande 50, 51, 52. Dans l'exemple illustré, le moyen de commande comporte un moteur 50 et des organes de transport 51 et 52, comme par exemple un coulisseau mobile sur un rail, permettant de déplacer dans l'espace les moyens de guidage 53, 54 des fils 5 groupés par exemple par deux ou par trois (tel qu'illustré). La figure 13a illustre un exemple de débattement des moyens de guidage d'un côté du pneumatique. Le guidage le plus près possible du profil jusqu'au niveau du bourrelet permet d'effectuer une pose avantageusement précise et régulière. Les moyens de guidage emmènent les fils en position basse ; un déplacement angulaire relatif entre les guides 54 et le pneumatique en cours d'assemblage permet de déplacer les fils en translation pour former les raccords 11. Pour ce faire, soit le pneumatique subit une rotation de quelques degrés, soit le guide 54 se déplace le long de la zone basse, soit une combinaison des deux. Selon une variante avantageuse, telle qu'illustré, un organe d'appui 55 exerce une légère pression contre la base des fils avant de conformer les raccords. On évite ainsi tout glissement ou déplacement accidentel des fils pendant la pose.

La figure 13b montre l'évolution du parcours quelques instants plus tard, alors qu'un raccord a été réalisé, que le guide 54 remonte le long du flanc pour effectuer la pose d'un autre tronçon, circonférentiellement espacé du précédent.

La figure 13c illustre le même pneumatique alors que le coulisseau arrive du côté opposé ; le guide 54 entraîne les fils dans la région de l'épaule. La pose le long du flanc opposé et la réalisation des raccords correspondants est réalisée de façon similaire à celle préalablement décrite du premier flanc.

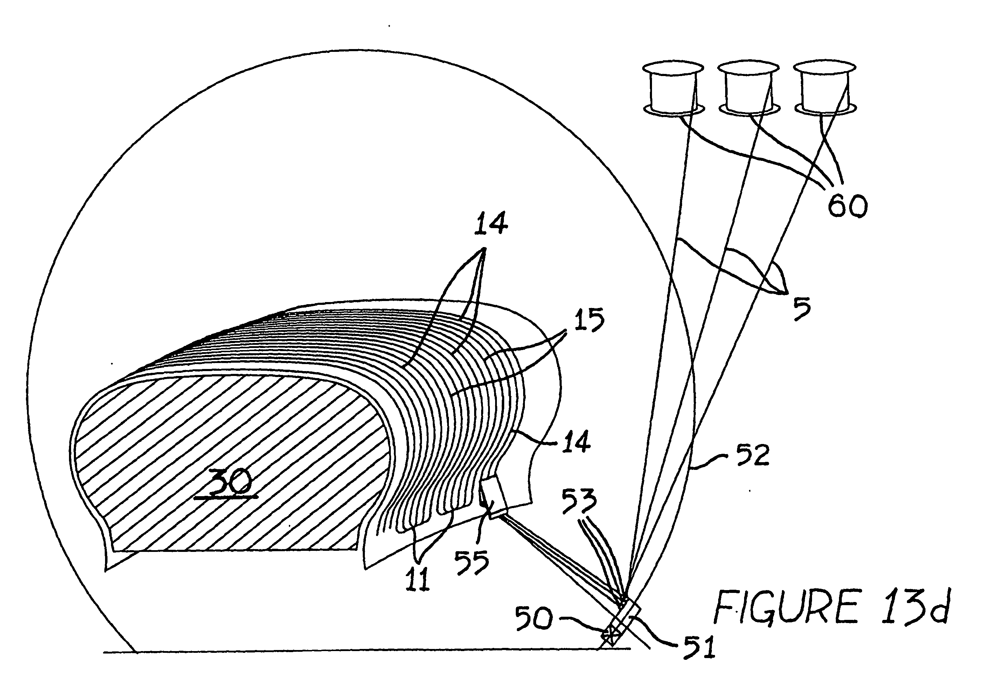

La figure 13d illustre le retour du coulisseau 51 et des moyens de guidage afin de réaliser un nouveau tronçon « aller ».

Selon une variante avantageuse, les distance entre les fils avant pose est variable ou ajustable, de façon à permettre de poser les fils avec des espaces inter-fils plus ou moins grands selon les types de produits, voire avec des espaces variables sur un même produit, par exemple en fonction de la position sur le profil.

## Revendications

1. Pneumatique comportant au moins une structure de renfort (5) de type carcasse ancrée de chaque côté du pneumatique dans un bourrelet (4) dont la base est destinée à être montée sur un siège de jante, une armature de sommet, chaque bourrelet se prolongeant radialement vers l'extérieur par un flanc (3), les flancs rejoignant radialement vers l'extérieur une bande de roulement, la structure de renfort comprenant:
- un premier filament formant d'une part au niveau du sommet (2) et des flancs (3), une série de portions transversales s'étendant sensiblement d'un bourrelet à l'autre du pneumatique, et d'autre part, au niveau des bourrelets, des raccords (11) en forme de U réunissant deux portions transversales successives du premier filament,
- un second filament formant d'une part au niveau du sommet et des flancs, une série de portions transversales s'étendant sensiblement d'un bourrelet à l'autre du pneumatique, et d'autre part, au niveau des bourrelets, des raccords (11) en forme de U réunissant deux portions transversales successives du second filament,
- ledit pneumatique étant **caractérisé en ce que** les parcours respectifs des premier et second filaments sont agencés de façon à ce que, entre le sommet (2) et le bourrelet (4), un groupe (10) de filaments formé par un premier et un second filament voisins forment au moins une portion de parcours (16) sensiblement parallèles.

2. Pneumatique selon la revendication 1, dans lequel les portions de parcours (16) sensiblement parallèles représentent au moins sensiblement 25 % du parcours total des filaments entre le sommet et la zone d'ancrage.

3. Pneumatique selon la revendication 2, dans lequel les portions de parcours (16) sensiblement parallèles représentent entre sensiblement 30 % et 80 % du parcours total des filaments entre le sommet et la zone d'ancrage.

4. Pneumatique selon l'une des revendications 1 ou 2, dans lequel les portions de parcours (16) sensiblement parallèles sont prévues dans le flanc, sensiblement radialement extérieurement à la zone d'ancrage.

5. Pneumatique selon l'une des revendications 1 ou 2, dans lequel les portions de parcours (16) sensiblement parallèles sont prévues sensiblement radialement extérieurement à l'équateur du flanc.

6. Pneumatique selon l'une des revendications précédentes, comprenant un troisième filament formant d'une part au niveau du sommet (2) et des flancs (3), une série de portions transversales s'étendant sensiblement d'un bourrelet à l'autre du pneumatique, et d'autre part, au niveau des bourrelets, des raccords (11) en forme de U réunissant deux portions transversales successives du troisième filament, les parcours respectifs des premier, second et troisième filaments étant agencés de façon à ce que, entre le sommet (2) et le bourrelet (4), un groupe de filaments (10) formé par un premier, un second et un troisième filament voisins forment au moins une portion de parcours (16) sensiblement parallèles.

7. Pneumatique comportant au moins une structure de renfort (5) de type carcasse ancrée de chaque côté du pneumatique dans un bourrelet (4) dont la base est destinée à être montée sur un siège de jante, une armature de sommet, chaque bourrelet (4) se prolongeant radialement vers l'extérieur par un flanc (3), les flancs rejoignant radialement vers l'extérieur une bande de roulement, la structure de renfort comprenant:
- un premier filament formant d'une part au niveau du sommet (2) et des flancs (3) une série de portions transversales s'étendant sensiblement d'un bourrelet à l'autre du pneumatique, et d'autre part, au niveau des bourrelets, des raccords (11) en forme de U réunissant deux portions transversales successives du premier filament,
- un second filament formant au niveau du sommet (2) et des flancs une série de portions transversales ;
- ledit pneumatique étant **caractérisé en ce que** les parcours respectifs des premier et second filaments sont agencés de façon à ce que, entre le sommet (2) et le bourrelet (4), un groupe de filaments (10) formé par un premier et un second filament voisins forment au moins une portion (16) de parcours sensiblement parallèles, et **en ce que** ledit second filament s'étend sensiblement d'un bourrelet à l'autre du pneumatique et comporte des extrémités libres (17) étant disposées de part et d'autre du pneumatique dans la zone de chacun des bourrelets (4).

8. Pneumatique selon l'une des revendications précédentes, dans lequel les portions de parcours (16) sensiblement parallèles suivent des trajectoires sensiblement géodésiques.

9. Pneumatique selon l'une des revendications précédentes, dans lequel les tronçons "aller" et "retour" d'au moins deux groupes distincts se croisent de façon à former un maillage de fils.

10. Pneumatique selon l'une des revendications précédentes, dans lequel au moins un agencement de fils suivant un parcours sensiblement circonférentiel est disposé de façon sensiblement adjacente à ladite structure de renfort au niveau du bourrelet.

11. Pneumatique selon l'une des revendications précédentes, dans lequel un bourrelet comporte une tringle autour de laquelle une portion des fils coopère.

## Patentansprüche

1. Luftreifen, der mindestens eine Verstärkungsstruktur (5) vom Karkassentyp, die auf jeder Seite des Luftreifens in einem Wulst (4) verankert ist, dessen Basis auf einen Felgensitz montiert werden soll, und eine Scheitelbewehrung aufweist, wobei jeder Wulst radial nach außen in eine Flanke (3) übergeht, die Flanken radial nach außen in einem Laufstreifen enden und die Verstärkungsstruktur aufweist:
- ein erstes Filament, das einerseits auf der Höhe des Scheitels (2) und der Flanken (3) eine Reihe von transversalen Bereichen, die sich in etwa von einem Wulst des Luftreifens zum anderen erstrecken, und andererseits auf der Höhe der Wülste Verbindungsstücke (11) in U-Form bildet, die zwei transversal aufeinander folgende Bereiche des ersten Filaments miteinander verbinden,
- ein zweites Filament, das einerseits auf der Höhe des Scheitels und der Flanke eine Reihe von transversalen Bereichen, die sich in etwa von einem Wulst des Luftreifens zum anderen erstrecken, und andererseits auf der Höhe der Wülste Verbindungsstücke (11) in U-Form bildet, die zwei transversal aufeinander folgende Bereiche des zweiten Filaments verbinden,
- wobei der Luftreifen **dadurch gekennzeichnet ist, dass** der Verlauf des ersten Filaments bzw. des zweiten Filaments so ist, dass zwischen dem Scheitel (2) und dem Wulst (4) eine Gruppe (10) von Filamenten, die aus einem ersten Filament und einem zweiten Filament, die benachbart sind, gebildet wird, mindestens ein Teilstück mit in etwa parallelen Verläufen (16) aufweist.

2. Luftreifen nach Anspruch 1, wobei die Teilstücke mit in etwa parallelen Verläufen (16) mindestens etwa 25 % des Gesamtverlaufs der Filamente zwischen dem Scheitel und der Verankerungszone ausmachen.

3. Luftreifen nach Anspruch 2, wobei die Teilstücke der in etwa parallelen Verläufe (16) etwa 30 bis 80 % des Gesamtverlaufs der Filamente zwischen dem Scheitel und der Verankerungszone ausmachen.

4. Luftreifen nach einem der Ansprüche 1 oder 2, wobei die Teilstücke mit in etwa parallelen Verläufen (16) in den Flanken in etwa radial außen an der Verankerungszone vorgesehen sind.

5. Luftreifen nach einem der Ansprüche 1 oder 2, wobei die Teilstücke mit in etwa parallelen Verläufen (16) in etwa radial außen am Äquator der Flanke angeordnet sind.

6. Luftreifen nach einem der vorhergehenden Ansprüche, der ein drittes Filament aufweist, das einerseits auf der Höhe des Scheitels (2) und der Flanken (3) eine Reihe von transversalen Bereichen, die sich in etwa von einem Wulst des Luftreifens zum anderen erstrecken, und andererseits auf der Höhe der Wülste Verbindungsstücke (11) in U-Form bildet, die zwei aufeinander folgende transversale Bereiche des dritten Filaments miteinander verbinden, wobei der Verlauf des ersten, zweiten und dritten Filaments jeweils so ist, dass zwischen dem Scheitel (2) und dem Wulst (4) eine Gruppe von Filamenten (10), die aus einem ersten, einem zweiten und einem dritten Filament, die benachbart sind, gebildet wird, zumindest ein Teilstück mit in etwa parallelen Verläufen (16) bildet.

7. Luftreifen, der mindestens eine Verstärkungsstruktur (5) vom Karkassentyp, die auf jeder Seite des Luftreifens in einem Wulst (4) verankert ist, dessen Basis auf einen Felgensitz montiert werden soll, und eine Scheitelbewehrung aufweist, wobei jeder Wulst (4) radial nach außen in eine Flanke (3) übergeht, die Flanken radial nach außen in einem Laufstreifen enden und die Verstärkungsstruktur aufweist:
- ein erstes Filament, das einerseits auf der Höhe des Scheitels (2) und der Flanken (3) eine Reihe von transversalen Bereichen, die sich in etwa von einem Wulst des Luftreifens zum anderen erstrecken, und andererseits auf der Höhe der Wülste Verbindungsstücke (11) in U-Form bildet, die zwei transversal aufeinander folgende Bereiche des ersten Filaments miteinander verbinden,
- ein zweites Filament, das auf der Höhe des Scheitels und der Flanke eine Reihe von transversalen Bereichen bildet,
- wobei der Luftreifen **dadurch gekennzeichnet ist, dass** der Verlauf des ersten Filaments bzw. des zweiten Filaments jeweils so ist, dass eine Gruppe von Filamenten (10), die aus einem ersten Filament und einem zweiten Filament, die benachbart sind, gebildet wird, zwischen dem Scheitel (2) und dem Wulst (4) mindestens ein Teilstück (16) mit in etwa parallelen Verläufen bildet, und **dadurch**, dass das zweite Filament sich in etwa von einem Wulst des Luftreifens zum anderen erstreckt und freie Enden (17) aufweist, die auf beiden Seiten des Luftreifens in der jeweiligen Wulstzone (4) angeordnet sind.

8. Luftreifen nach einem der vorhergehenden Ansprüche, wobei die Teilstücke (16) mit in etwa parallelen Verläufen in etwa geodätischen Trajektorien folgen.

9. Luftreifen nach einem der vorhergehenden Ansprüche, wobei die "hin"geführten und "zurück"geführten Teilstücke von mindestens zwei verschiedenen Gruppen sich zur Bildung eines Drahtgeflechts überkreuzen.

10. Luftreifen nach einem der vorhergehenden Ansprüche, wobei mindestens eine Drahtanordnung, die in etwa in Umfangsrichtung verläuft, auf der Höhe des Wulstes in etwa angrenzend an die Verstärkungsstruktur angeordnet ist.

11. Luftreifen nach einem der vorhergehenden Ansprüche, bei dem ein Wulst einen Wulstkern aufweist, um den herum ein Teil der Drähte miteinander kooperieren.

## Claims

1. A tyre comprising at least one reinforcement structure (5) of carcass type anchored on either side of the tyre in a bead (4), the base of which is intended to be mounted on a rim seat, a crown reinforcement, each bead being extended radially towards the outside by a sidewall (3), the sidewalls joining a tread radially towards the outside, the reinforcement structure comprising:
- a first filament forming on one hand at the level of the crown (2) and the sidewalls (3) a series of transverse portions extending substantially from one bead of the tyre to the other, and on the other hand, at the level of the beads, U-shaped connections (11) joining two successive transverse portions of the first filament,
- a second filament forming on one hand at the level of the crown and the sidewalls a series of transverse portions extending substantially from one bead of the tyre to the other, and on the other hand, at the level of the beads, U-shaped connections (11) joining two successive transverse portions of the second filament,
- said tyre being **characterised in that** the respective paths of the first and second filaments are arranged such that, between the crown (2) and the bead (4), a group (10) of filaments formed by a first and a second adjacent filaments forms at least a portion of substantially parallel paths (16).

2. A tyre according to Claim 1, in which the portions of substantially paraiiei paths (16) represent at least substantially 25% of the total path of the filaments between the crown and the anchoring zone.

3. A tyre according to Claim 2, in which the portions of substantially parallel paths (16) represent between substantially 30% and 80% of the total path of the filaments between the crown and the anchoring zone.

4. A tyre according to one of Claims 1 or 2, in which the portions of substantially parallel paths (16) are provided in the sidewall, substantially radially externally to the anchoring zone

5. A tyre according to one of Claims 1 or 2, in which the portions of substantially parallel paths (16) are provided substantially radially externally to the equator of the sidewall.

6. A tyre according to one of the preceding claims, comprising a third filament forming on one hand, at the level of the crown (2) and the sidewalls (3), a series of transverse portions extending substantially from one bead of the tyre to the other, and on the other hand, at the level of the beads, U-shaped connections (11) joining two successive transverse portions of the third filament, the respective paths of the first, second and third filaments being arranged such that, between the crown (2) and the bead (4), a group of filaments (10) formed by a first, a second and a third adjacent filament forms at least a portion of substantially parallel paths (16).

7. A tyre comprising at least one reinforcement structure (5) of carcass type anchored on either side of the tyre in a bead (4), the base of which is intended to be mounted on a rim seat, a crown reinforcement, each bead (4) being extended radially towards the outside by a sidewall (3), the sidewalls joining a tread radially towards the outside, the reinforcement structure comprising:
- a first filament forming on one hand at the level of the crown (2) and the sidewalls (3) a series ot transverse portions extending substantially from one bead of the tyre to the other, and on the other hand, at the level of the beads, U-shaped connections (11) joining two successive transverse portions of the first filament,
- a second filament forming at the level of the crown (2) and the sidewalls a series of transverse portions;
- said tyre being **characterised in that** the respective paths of the first and second filaments are arranged such that, between the crown (2) and the bead (4), a group (10) of filaments formed by a first and a second adjacent filament forms at least a portion of substantially parallel paths (16), and **in that** said second filament extends substantially from one bead of the tyre to the other and comprises free ends (17) being arranged on either side of the tyre in the zone of each of the beads (4).

8. A tyre according to one of the preceding claims, in which the portions of substantially parallel paths (16) follow substantially geodesic trajectories.

9. A tyre according to one of the preceding claims, in which the "forward" and "return" sections of at least two distinct groups cross to form a mesh pattern of cords.

10. A tyre according to one of the preceding claims, in which at least one arrangement of cords along a substantially circumferential path is arranged substantially adjacent to said reinforcement structure at the level of the bead.

11. A tyre according to one of the preceding claims, in which a bead comprises a bead wire around which a portion of the cords cooperates.
